Europäisches Patentamt

European Patent Office

Office européen des brevets

(11) Publication number: **0 072 630**
**B1**

# EUROPEAN PATENT SPECIFICATION

(45) Date of publication of patent specification: **16.10.85**

(51) Int. Cl.⁴: **F 23 L 7/00, F 23 N 1/02**

(21) Application number: **82303850.0**

(22) Date of filing: **20.07.82**

(54) **Combustion apparatus.**

(30) Priority: **14.09.81 JP 145342/81**
**21.07.81 JP 108997/81**
**27.02.82 JP 27900/82**

(43) Date of publication of application:
**23.02.83 Bulletin 83/08**

(45) Publication of the grant of the patent:
**16.10.85 Bulletin 85/42**

(84) Designated Contracting States:
**DE FR GB NL**

(56) References cited:
**DE-A-2 938 556**
**DE-C- 360 282**
**DE-C- 373 203**
**US-A-3 905 745**

(73) Proprietor: **OSAKA GAS CO., LTD**
**1 Hiranomachi 5-chome, Higashi-ku**
**Osaka-shi, Osaka, 541 (JP)**

(72) Inventor: **Shimizu, Shoji**
**1, Hirano-machi 5-chome**
**Higashi-ku Osaka (JP)**
Inventor: **Mitsudomi, Hiroyuki**
**1, Hirano-machi 5-chome**
**Higashi-ku Osaka (JP)**
Inventor: **Ito, Hirosato**
**1, Hirano-machi 5-chome**
**Higashi-ku Osaka (JP)**
Inventor: **Tadaka, Daizo**
**1, Hirano-machi 5-chome**
**Higashi-ku Osaka (JP)**

(74) Representative: **Williams, Trevor John et al**
**J.A. KEMP & CO. 14 South Square Gray's Inn**
**London WC1R 5EU (GB)**

Courier Press, Leamington Spa, England.

## Description

The present invention relates to a combustion apparatus for combusting fuel in a combustion device by utilizing air which is enriched with oxygen through an oxygen permselective membrane and is fed via a main piping line to the combustion device by a vacuum pump.

Such apparatus is described in DE—C—373203 which describes the provision of a temperature differential to assist in passage of the required gas through the permselective membrane. No means are provided by which the degree of enrichment or the rate of flow of enriched air to the combustion device can be readily varied. The present invention is directed at providing such means so that the quantity of air for combustion and the oxygen concentration of the air can be varied as required with changes in the combustion load in a combustion device, for example a furnace that may be required to obtain temperatures as high as 1800 to 1900°C in the manufacture of high grade china and artificial jewels.

The present invention is characterised in that a bypass piping line is connected to the main piping line on the upstream and downstream sides of the vacuum pump and is equipped with a control valve, a second piping line equipped with a control valve connects the main piping line at a location between the vacuum pump and the oxygen permselective membrane to the atmosphere, and a third piping line equipped with a control valve connects the main piping line at a location between the vacuum pump and the combustion device (1) to the atmosphere.

With this arrangement the quantity of air enriched with oxygen fed to the combustion device, e.g. furnace, and the oxygen concentration of the air can readily be varied as required.

A detailed description of the invention will be made with reference to the accompanying drawings wherein like numerals designate corresponding parts in the Figures.

Fig. 1 is a flow sheet according to an embodiment of the invention.

Fig. 2 is a graph showing characteristics of oxygen permselective membrane.

Fig. 3 is a flow sheet according to another embodiment of the invention.

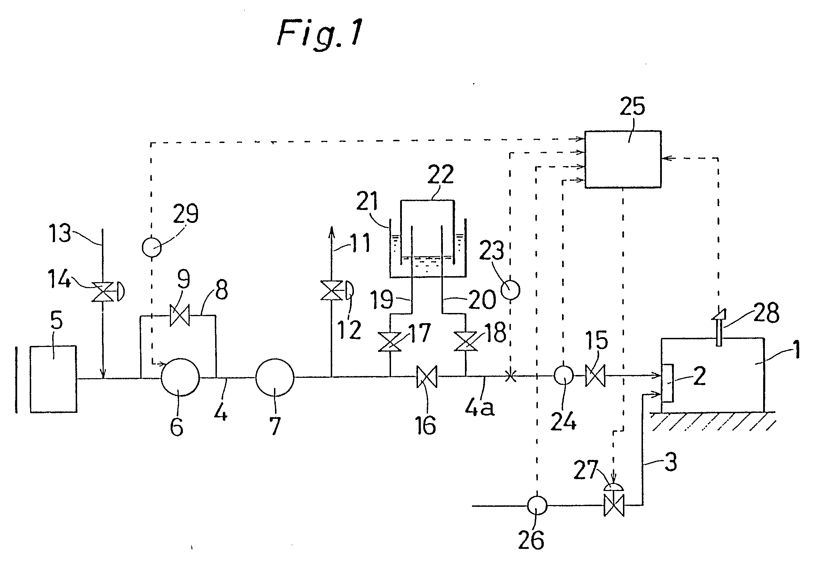

Fig. 1 is a flow sheet according to an embodiment of the invention. Liquid fuel is fed via a piping line 3 to a burner 2 mounted on a combustion furnace 1. Air for combustion, which is enriched with oxygen through an oxygen permselective membrane 5, is fed to the burner 2 via a piping line 4 equipped with a vacuum pump 6 and a fan 7. According to combustion of the liquid fuel with the air enriched with oxygen, the liquid fuel can be combusted at a high temperature in the combustion furnace 1.

The oxygen permselective membrane 5 is a high polymer membrane, for example, polydimethylsiloxane. Furthermore, the high polymer membrane, the oxygen permselectivity of which is $10^{-10}$ to $10^{-7}$ (cm/cm$^2$·sec·cmHg) and the ratio of oxygen permselectivity and nitrogen permselectivity of which is more than 2, is suitable as the oxygen permselective membrane 5.

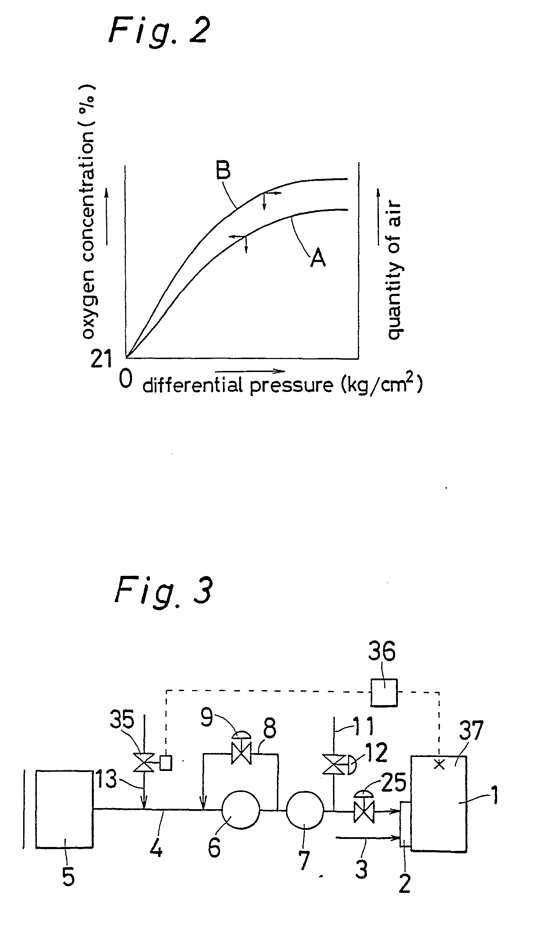

Fig. 2 is a graph showing characteristics of the oxygen permselective membrane 5. The oxygen permselective membrane 5 enriches oxygen concentration of air permeated through the oxygen permselective membrane 5 with increasing differential pressure between frontside and backside of the oxygen permselective membrane 5 as a curved line A shows. Moreover, the oxygen permselective membrane 5 increases the quantity of air permeated through the oxygen permselective membrane 5 with increasing the differential pressure as a curved line B shows. Thus, for concentrating and separating gas through the oxygen permselective membrane 5, it should be necessary to make a difference of pressure between frontside and backside of the oxygem permselective membrane 5. Accordingly, it is preferable to pressurize the frontside of the oxygen permselective membrane 5. According to the experiment by the inventors, however, the separation of oxygen from the air is prevented by occurring polarization of gas which is difficult to permeate on the surface of the oxygen permselective membrane 5 immediately after the air begins to permeate through the oxygen permselective membrane 5. In order to prevent the phenomena as mentioned above, the fresh air should be supplied continuously, so that a large percentage of the fresh air pressurized at great pains results in being exhausted. It is preferable that the energy consumption for making the air enriched with oxygen is as little as possible from the aspect of saving energy. Accordingly, it is evident that depressurizing the backside of the oxygen permselective membrane 5 by the vacuum pump 6 is superior to pressurizing the frontside of the oxygen permselective membrane 5. In case of depressurizing the backside of the oxygen permselective membrane 5, the air is liable to pulsate in the piping line 4. Thereupon, the fan 7 is provided at the downstream portion of the vacuum pump 6 in order to prevent the pulsation of the air from reaching the burner 2.

A bypass piping line 8 equipping a control valve 9 is provided on the piping line 4 with connecting the upstream side and the downstream side of the vacuum pump 6. At the upstream portion of the vacuum pump 6, a piping line 13 equipping a control valve 14 is connected with the upstream portion of the connecting point of the bypass piping line 8 and the piping line 4, wherein the end of the piping line 13 is open to the atmosphere. At the downstream portion of the vacuum pump 6, a piping line 11 equipping a control valve 12 is connected with the downstream portion of the fan 7, wherein the end of the piping line 11 is open to the atmosphere.

A control valve 15 for controlling the quantity of the oxygen rich air flowing to the burner 2 and adjusting the combustion temperature of the burner to a predetermined temperature, is provided at a portion 4a of the piping line 4 between the fan 7 and the burner 2. Moreover, valves 16, 17 and 18 for controlling the quantity of the flowing air are provided at the portion 4a of the piping line 4. The air enriched with oxygen from the fan 7 is supplied via control valves 16 and 15 to the burner 2. When the opening portion of the control valve 15 is small, the air enriched with oxygen from the fan 7 flows to a holder 21 via a piping line 19 equipped with the valve 17 and a piping line 20 equipped with the valve 18. The holder 21 has a cap-like case 22 which is water-sealed and is capable of going up and down, and has well-known composition to persons skilled in the art.

By means of providing the holder 21 as mentioned above, the surplus air enriched with oxygen which is supplied to the burner 2 is held in the holder 21 temporally. Accordingly, as the flow of the air enriched with oxygen can be increased with load of the burner 2 when the load is changed on a large scale, the combustion apparatus has superior advantage from the aspect of saving energy. Furthermore, as the larger quantity of the air enriched with oxygen can be temporally supplied to the burner 2 than the quantity of the air enriched with oxygen which permeates through the oxygen permselective membrane 5, the composition elements, such as the oxygen permselective membrane 5, the vacuum pump 6, the fan 7 and so on with relation to the oxygen permselective membrane 5, can be in small sizes.

An oxygen concentration analyzer 23 and an air flow meter 24 are provided at the portion 4a upstream control valve 15, and values detected by the analyzer of oxygen concentration 23 and the air flow meter 24 are received by a control means 25. The piping line 3 is equipped with a fuel flow meter 26 and a control valve 27, and value detected by the fuel flow meter 26 is received by the control means 25. Moreover, the combustion furnace 1 is provided with a temperature detecting element 28 and the detected temperature in the combustion furnace 1 is supplied to the control means 25.

The control means 25 has a function to calculate the quantity of oxygen in the air supplied to the burner 2 based on the value detected by the air flow meter 24, and to calculate an air ratio based on the calculated quantity of oxygen and on the value detected by the fuel flow meter 26. Moreover, an air ratio is predetermined in the control means 25. A signal from the control means 25 for varying the rotation value of the vacuum pump 6, is supplied to a controller 29 so that the calculated air ratio becomes about the same as the predetermined air ratio, compared with each other. The control means controls the opening portion of the control valve 27 in order that the temperature detected by the temperature detecting element 28 becomes the same as the predetermined temperature. Thus, the combustion rate of the burner 2 is controlled in order that the temperature in the combustion furnace 1 becomes to be the same as the predetermined temperature. Moreover, the air ratio is automatically controlled by means of varying the rotation value of the vacuum pump 6.

The temperature detecting element 28 may be omitted.

Let us assume the case of varying the quantity of the air enriched with oxygen for combustion and varying the oxygen concentration of the air enriched with oxygen for combustion. When the differential pressure through the oxygen permselective membrane 5 is for example 600 mmHg, the oxygen concentration of the air permeated through the oxygen permselective membrane 5 is for example 31%. In this state, for decreasing the oxygen concentration of the air supplied to the burner 2 to about 25%, the control valve 14 is opened so as to induce the atmospheric air into the piping line 4. Then, although the oxygen concentration of the combustion air is decreased, the quantity of the combustion air is increased. Next, the control valve 9 is opened so as to keep the induction pressure of the vacuum pump 6 uniform. Accordingly, the combustion air the quantity of which is uniform and the oxygen concentration of which is decreased, can be supplied to the burner 2. In case of keeping the oxygen concentration of the combustion air uniform and decreasing the quantity of the combustion air, the opening portion of the control valve 15 becomes small and the opening portion of the control valve 12 becomes large. Then a part of the combustion air from the fan 7 is exhausted via the piping line 11 to the atmosphere, and the quantity of the combustion air supplied to the burner 2 is decreased.

In case of varying the quantity and the oxygen concentration of the combustion air at the same time, the control valves 12 and 14 are closed and the opening portion of the control valve 9 on the bypass piping line 8 is controlled with opening the control valve 15. Then, the induction pressure of the vacuum pump 6 is adjusted. Accordingly, as the differential pressure through the oxygen permselective membrane 5 is varied, the oxygen concentration and the quantity of the combustion air are varied at the same time as shown in Fig. 2.

Fig. 3 is a flow sheet of another embodiment in accordance with one preferred embodiment of the present invention, in which portions corresponding to those in Fig. 1 are designated by same reference numerals. In this embodiment, a solenoid valve 35 is provided instead of the control valve 14. The combustion furnace 1 is provided with a temperature detecting element 37 and a temperature detected by the temperature detecting element 37 is received by a temperature controller 36. Under the temperature controller 36, a temperature is predetermined, and the solenoid valve 35 is open until the detected temperature reaches the predetermined temperature and solenoid valve 35 is closed when the detected temperature becomes higher than the predetermined temperature.

Such an embodiment is effective in raising temperature of a bach type furnace used for the combustion furnace 1. In other words, heat transfer rate is changed according to the difference in temperature between objects to be heated and flame in the furnace, so that the heat transfer rate is lowered by decreasing the difference in temperature when temperature in the furnace is high. In this case, if air enriched with oxygen is used for combustion, the difference in temperature is large, which makes the heat transfer rate increase. Accordingly, increasing the heat transfer rate results in high thermal efficiency. Then, by means of fuel being combusted with air which is induced via the piping line 13 and is not enriched with oxygen, power consumption may be reduced greatly in the vacuum pump 6 while the combustion furnace is at a low temperature.

## Claims

1. A combustion apparatus for combusting fuel in a combustion device (1) by utilizing air which is enriched with oxygen through an oxygen permselective membrane (5) and is fed via a main piping line (4) to the combustion device (1) by a vacuum pump (6) characterized in that a bypass piping line (8) is connected to the main piping line (4) on the upstream and downstream sides of the vacuum pump (6) and is equipped with a control valve (9), a second piping line (13) equipped with a control valve (14) connects the main piping line (4) at a location between the vacuum pump (6) and the oxygen permselective membrane to the atmosphere, and a third piping line (11) equipped with a control valve (12) connects the main piping line (4) at a location between the vacuum pump (6) and the combustion device, e.g. furnace (1), to the atmosphere.

2. A combustion apparatus according to claim 1, characterized in that a connection (19, 20) is provided from the main piping line (4) at a location between the vacuum pump (6) and the combustion furnace (1) to a storage holder (21).

3. A combustion apparatus according to claim 1, characterized in that the main piping line (4) is provided with an oxygen concentration analyzer (23) and an air flow meter (24), a fuel flow meter (26) is provided in a fuel line (3) for feeding fuel to the combustion device (1), and in that means (25) are provided for calculating air ratio based on detected quantity of air, detected oxygen concentration and detected quantity of fuel, and for controlling the quantity of air induced by the vacuum pump (6) so that the calculated air ratio is equal to predetermined air ratio.

## Patentansprüche

1. Verbrennungsanlage zur Verbrennung von Brennstoff in einer Verbrennungsvorrichtung (1) mit Hilfe von Luft, die durch eine sauerstoffdurchlässige Membran (5) mit Sauerstoff angereichert und über eine Hauptleitung (4) mittels einer Vakuumpumpe (6) zur Verbrennungsvorrichtung (1) zugeführt wird, dadurch gekennzeichnet, daß eine Bypassleitung (8) an die Hauptleitung (4) stromaufwärts und stromabwärts der Vakuumpumpe (6) angeschlossen und mit einem Steuerventil (9) versehen ist, daß eine mit einem Steuerventil (14) versehene zweite Leitung (13) die Hauptleitung (4) an einer Stelle zwischen der Vakuumpumpe (6) und der sauerstoffdurchlässigen Membran mit der Atmosphäre verbindet, und daß eine mit einem Steuerventil (12) versehene dritte Leitung (11) die Hauptleitung (4) an einer Stelle zwischen der Vakuumpumpe (6) und der Verbrennungsvorrichtung, z.B. einem Ofen (1), mit der Atmosphäre verbindet.

2. Verbrennungsanlage nach Anspruch 1, dadurch gekennzeichnet, daß von der Hauptleitung (4) an einer Stelle zwischen der Vakuumpumpe (6) und dem Verbrennungsofen (1) zu einem Lagerbehälter (21) eine Verbindung (19, 20) vorgesehen ist.

3. Verbrennungsanlage nach Anspruch 1, dadurch gekennzeichnet, daß die Hauptleitung (4) mit einem Sauerstoffkonzentrations-Analysator (23) und einem Luftdurchflußmesser (24) versehen ist, daß ein Brennstoffdurchflußmesser (26) in einer Brennstoffleitung (3) vorgesehen ist zur Zuführung von Brennstoff zur Verbrennungsvorrichtung (1), und daß Einrichtungen (25) vorgesehen sind zur Berechnung des Luftverhältnisses auf der Grundlage der erfaßten Luftmenge, der erfaßten Sauerstoffkonzentration und der erfaßten Brennstoffmenge, und zur Steuerung der durch die Vakuumpumpe (6) eingeleiteten Luftmenge, so daß das berechnete Luftverhältnis gleich ist dem vorgegebenen Luftverhältnis.

## Revendications

1. Appareil de combustion pour brûler un combustible dans un dispositif de combustion (1) en utilisant de l'air enrichi en oxygène au moyen d'une membrane sélectivement perméable en oxygène (5) et amené par une canalisation principale (4) au dispositif de combustion (1) par une pompe à vide (6), caractérisé en ce qu'une canalisation de dérivation (8) est raccordée à la canalisation principale (4) sur le côté amont et sur le côté aval de la pompe à vide (6) et est équipée d'une valve de commande (9), en ce qu'une deuxième canalisation (13), équipée d'une valve de commande (14), raccorde à l'atmosphère la canalisation principale (4) à un endroit situé entre la pompe à vide (6) et la membrane sélectivement perméable à l'oxygène, et en ce qu'une troisième canalisation (11), équipée d'une valve de commande (12), raccorde à l'atmosphère la canalisation principale (4) à un endroit situé entre la pompe à vide (6) et le dispositif de combustion, par exemple le four (1).

2. Appareil de combustion selon la revendication 1, caractérisé en ce qu'un raccordement (19, 20) est prévu de la canalisation principale (4) jusqu'à un accumulateur (21), à un endroit situé entre la pompe à vide (6) et le four à combustion (1).

3. Appareil de combustion selon la revendication 1, caractérisé en ce que la canalisation principale (4) est équipée d'un analyseur de teneur en oxygène (23) et d'un débit-mètre d'air (24), en ce qu'un débit-mètre de combustible (26) est prévu dans une canalisation de combustible (3) amenant le combustible au dispositif de combustion (1), et en ce qu'un dispositif (25) est prévu pour calculer un rapport d'air sur la base de la quantité d'air détectée, de la teneur en oxygène détectée et de la quantité de combustible détectée, et pour régler la quantité de l'air admis par la pompe à vide (6) de façon que le rapport d'air calculé soit égal au rapport d'air prédéterminé.

*Fig.1*

0 072 630

## Fig. 2

## Fig. 3